# DEMANDE DE BREVET EUROPEEN

(11) **EP 4 851 675 A1**
(43) Date de publication de la demande: **09.12.2026**
(21) Numéro de dépôt: 26183013.7
(22) Date de dépôt: 03.06.2026
(51) Int. Cl.: G01V 8/14, G01D 4/00, G01F 23/00, G01F 23/80, G01F 23/292

(54) **DÉTECTEUR OPTIQUE D'IMMERSION**

(30) Priorité: 06.06.2025 FR 2506144
(71) Demandeur: SAGEMCOM ENERGY & TELECOM SAS, 92270 Bois-Colombes (FR)
(72) Inventeur: GOARANT, Mickaël, 92270 BOIS-COLOMBES (FR); ABITBOL, Michel, 92270 BOIS-COLOMBES (FR)
(74) Mandataire: Cabinet Boettcher

(57) **Abrégé**

Equipement (1) comprenant un boîtier (2) dans lequel sont intégrés un émetteur (21), un récepteur (22) et une unité de traitement (15) agencée pour :
o piloter l'émetteur (21) pour que celui-ci émette un signal lumineux de détection (S1) ;
o acquérir un premier signal électrique (Se1) produit par le récepteur (22) lorsque celui-ci reçoit le signal lumineux de détection, et un deuxième signal électrique (Se2) produit alors que l'émetteur est éteint ;
o comparer avec au moins un seuil la différence entre un premier niveau du premier signal électrique (Se1) et un deuxième niveau du deuxième signal électrique (Se2) ;
o détecter à partir de ladite comparaison une immersion de l'équipement (1).

## Description

L'invention concerne le domaine de la détection de l'immersion d'un équipement.

### ARRIERE PLAN DE L'INVENTION

Certains équipements électriques sont susceptibles d'être soumis, au cours de leur vie, à une ou plusieurs immersions de durée variable et possiblement importante. Parmi ces équipements, on trouve par exemple des compteurs, et notamment des compteurs d'eau installés dans des regards.

Ces équipements électriques sont donc conçus pour être protégés contre les effets d'une immersion temporaire dans l'eau, typiquement jusqu'à une certaine profondeur et pendant une certaine durée. Par exemple, les équipements électriques qui sont conformes à l'indice de protection IP 67 sont protégés contre les effets d'une immersion temporaire jusqu'à 1 m pendant une durée de 30 mn.

Il semble très intéressant d'être en mesure de détecter une immersion d'un tel équipement électrique, mais aussi une durée de ladite immersion. On peut ainsi prévenir l'utilisateur/client lorsque la durée d'immersion risque d'avoir un impact négatif sur le fonctionnement de l'équipement. Cela permet aussi au fabricant de l'équipement de gérer la problématique de la garantie : si le client n'intervient pas après l'alerte et si l'équipement électrique reste immergé au-delà d'une certaine durée, entraînant une défaillance, le client ne pourra pas prétendre à un remplacement sous garantie, la responsabilité lui incombant.

### OBJET DE L'INVENTION

L'invention a pour objet de détecter efficacement et de manière simple et peu coûteuse une immersion d'un équipement.

### RESUME DE L'INVENTION

En vue de la réalisation de ce but, on propose un équipement comprenant un boîtier dans lequel sont intégrés :
- un émetteur agencé pour émettre des signaux lumineux ;
- un récepteur agencé pour recevoir les signaux lumineux après que ceux-ci se soient réfléchis contre une paroi interne du boîtier ;
- une unité de traitement agencée pour :
   ∘ piloter l'émetteur pour que celui-ci émette un signal lumineux de détection ;
   ∘ acquérir un premier signal électrique produit par le récepteur lorsque celui-ci reçoit le signal lumineux de détection ;
   ∘ acquérir un deuxième signal électrique produit par le récepteur alors que l'émetteur est éteint ;
   ∘ comparer avec au moins un seuil une valeur de détection courante représentative d'une différence entre un premier niveau du premier signal électrique et un deuxième niveau du deuxième signal électrique ;
   ∘ détecter à partir de ladite comparaison une immersion de l'équipement.

On a constaté que la présence d'eau dans l'équipement, et notamment dans le chemin optique, atténue les signaux lumineux réfléchis et capturés par le récepteur. On utilise donc ce phénomène pour détecter la présence d'eau dans l'équipement. La détection est à la fois efficace, simple et peu coûteuse à mettre en œuvre. La détection est basée sur la différence entre les niveaux des signaux électriques produits par le récepteur lorsque l'émetteur émet un signal lumineux et lorsque l'émetteur est éteint. On assure ainsi que la détection ne dépend pas de l'éclairage externe et on augmente ainsi la fiabilité de la détection.

On propose de plus un équipement tel que précédemment décrit, dans lequel l'unité de traitement est agencée pour :
- comparer la valeur de détection courante avec un premier seuil et un deuxième seuil inférieur au premier seuil ;
- si ladite valeur de détection courante est comprise entre le premier seuil et le deuxième seuil, détecter l'immersion de l'équipement ;
- si ladite valeur de détection courante est inférieure au deuxième seuil, détecter une ouverture du boîtier.

On propose de plus un équipement tel que précédemment décrit, dans lequel le premier seuil est compris entre 70% et 90% d'une valeur de détection de référence obtenue au cours d'une phase de calibration de l'équipement, et le deuxième seuil est compris entre 30% et 50% de ladite valeur de détection de référence.

On propose de plus un équipement tel que précédemment décrit, dans lequel l'unité de traitement est agencée pour produire une alarme lorsqu'une durée d'immersion devient supérieure à une durée prédéfinie.

On propose de plus un équipement tel que précédemment décrit, ladite durée d'immersion étant une durée en continue.

On propose de plus un équipement tel que précédemment décrit, ladite durée d'immersion étant une durée cumulée.

On propose de plus un équipement tel que précédemment décrit, dans lequel le boîtier comprend une première partie de boîtier et une deuxième partie de boîtier, la première partie de boîtier étant amovible, la paroi interne étant une paroi de la première partie de boîtier, la deuxième partie de boîtier intégrant l'émetteur et le récepteur, l'équipement étant agencé de sorte que, lorsque le boîtier est fermé, l'émetteur et le récepteur sont positionnés en regard de la paroi interne.

On propose de plus un équipement tel que précédemment décrit, dans lequel la deuxième partie de boîtier comprend une cloison transparente ou translucide aux signaux lumineux, l'équipement étant agencé de sorte que, lorsque le boîtier est fermé, ladite cloison est positionnée entre l'émetteur et le récepteur, d'une part, et la paroi interne, d'autre part.

On propose de plus un équipement tel que précédemment décrit, dans lequel le boîtier est rempli d'une résine ou d'un gel pour protéger des composants de l'équipement contre l'humidité.

On propose de plus un équipement tel que précédemment décrit, dans lequel la paroi interne comprend un réflecteur contre lequel sont réfléchis les signaux lumineux.

On propose de plus un équipement tel que précédemment décrit, l'équipement étant un compteur d'eau.

On propose de plus un procédé de détection, mis en œuvre dans l'unité de traitement de l'équipement tel que précédemment décrit, et comprenant les étapes de :
∘ piloter l'émetteur pour que celui-ci émette un signal lumineux de détection ;
∘ acquérir un premier signal électrique produit par le récepteur lorsque celui-ci reçoit le signal lumineux de détection ;
∘ acquérir un deuxième signal électrique produit par le récepteur alors que l'émetteur est éteint ;
∘ comparer avec au moins un seuil une valeur de détection courante représentative d'une différence entre un premier niveau du premier signal électrique et un deuxième niveau du deuxième signal électrique ;
∘ détecter à partir de ladite comparaison une immersion de l'équipement.

On propose de plus un programme d'ordinateur comprenant des instructions qui conduisent l'unité de traitement de l'équipement tel que précédemment décrit à exécuter les étapes du procédé de détection tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente une vue en coupe simplifiée, selon un plan vertical, d'un compteur d'eau ;
[Fig. 2] la figure 2 est une figure similaire à la figure 1, le compteur d'eau étant immergé ;
[Fig. 3] la figure 3 est un graphique comprenant des courbes de la différence de niveau de signal en fonction de la température, obtenues pour différents compteurs ;
[Fig. 4] la figure 4 représente des étapes du procédé de détection ;
[Fig. 5] la figure 5 est un graphique illustrant le séquencement des étapes du procédé de détection en cas d'immersion du compteur.

### DESCRIPTION DETAILLEE DE L'INVENTION

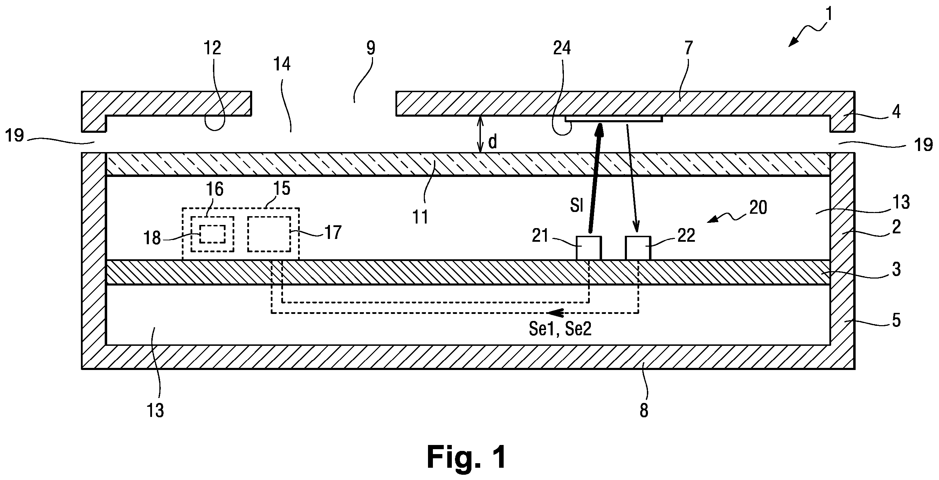

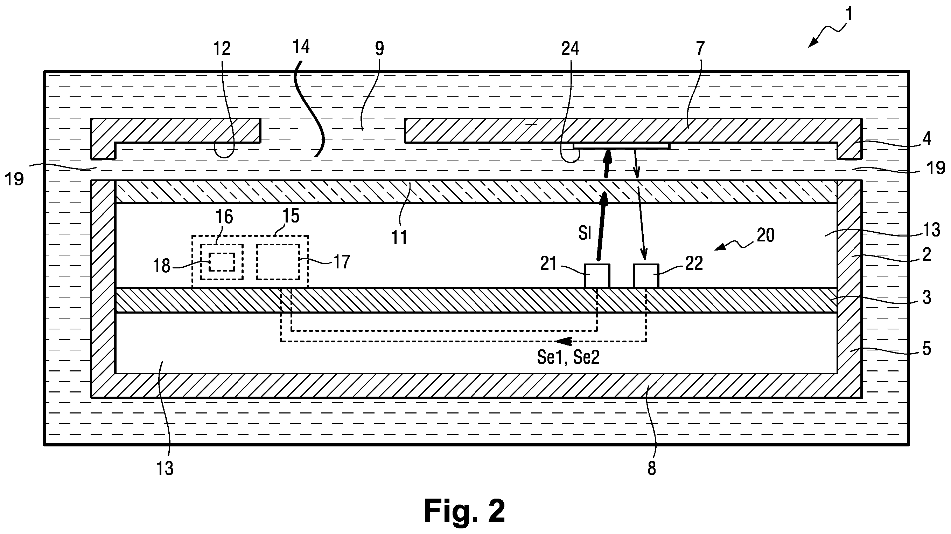

En référence aux figures 1 et 2, le compteur d'eau 1 est destiné à mesurer la consommation d'eau de l'installation d'un client (abonné). L'eau est fournie à l'installation par un réseau de distribution.

Comme on le voit sur la figure 2, le compteur 1 est susceptible d'être immergé dans l'eau alors qu'il est en opération.

Le compteur 1 comporte un boîtier 2 et une carte électronique 3 intégrée dans le boîtier.

Le boîtier 2 comprend ici une première partie de boîtier 4 (capot) et une deuxième partie de boîtier 5 (châssis).

Le capot 4 comprend une cloison supérieure 7 qui est aussi la cloison supérieure du boîtier 2.

Ici, tous les termes de position, tels que supérieur, inférieur, etc., s'interprètent en considérant que le compteur 1 se trouve dans sa position nominale de fonctionnement.

Le capot 4 est amovible. Le capot 4 peut être retiré par un opérateur qui travaille par exemple pour le distributeur d'eau ou pour le gestionnaire du réseau de distribution.

Le châssis 5 comprend une cloison inférieure 8 qui est aussi la cloison inférieure du boîtier 2. Le châssis 5 est destiné à être fixé sur un élément de l'installation, par exemple sur une conduite d'eau.

La cloison supérieure 7 du capot 4 comprend une ouverture 9 qui s'étend sur une partie de sa surface. La lumière, provenant de l'extérieur du boîtier 2, peut donc rentrer dans le boîtier 2 via cette ouverture 9.

Le châssis 5 comprend une cloison 11 transparente ou translucide (vitre) aux signaux lumineux, qui est ici sa cloison supérieure. Ainsi, lorsque le boîtier 2 est fermé, c'est-à-dire lorsque le capot 4 est positionné et fixé sur le châssis 5, la vitre 11 s'étend parallèlement à la cloison 7, en regard de la paroi interne 12 de la cloison 7, et à une distance d de la paroi interne 12 comprise typiquement entre 0,1 et 5 mm.

La lumière, provenant de l'extérieur, peut donc rentrer dans le châssis 5 via l'ouverture 9 et la vitre 11.

La carte électronique 3 est positionnée dans le châssis 5 du boîtier 2. Le circuit imprimé de la carte électronique 3 s'étend parallèlement à la vitre 11.

Le boîtier 2 est rempli de résine ou de gel 13 (transparent ou translucide) pour réaliser un *potting* permettant de protéger les composants de la carte électronique 3 de l'humidité, en particulier lorsque le compteur 1 est immergé et que de l'eau rentre dans le boîtier 2.

On note qu'un canal 14 est défini dans le boîtier 2, ici entre le châssis 5 et le capot 4, qui permet à l'eau de s'évacuer suite à un immersion du compteur 1.

Le canal 14 est ici un canal linéaire. Le canal 14 comprend deux extrémités 19, de part et d'autre du boîtier 2, qui débouchent à l'extérieur du boîtier 2.

La carte électronique 3 comporte tout d'abord une unité de traitement 15.

L'unité de traitement 15 comprend au moins un composant de traitement 16, qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). Le composant de traitement 16 est ici un microcontrôleur.

L'unité de traitement 15 comprend de plus une ou des mémoires 17, reliées à ou intégrées dans le microcontrôleur 16. Au moins l'une de ces mémoires 17 forme un support d'enregistrement lisible par ordinateur, sur lequel est enregistré au moins un programme d'ordinateur comprenant des instructions qui conduisent le microcontrôleur 16 à exécuter au moins certaines des étapes du procédé de détection qui sera décrit plus bas.

L'unité de traitement 15 comporte de plus un convertisseur analogique numérique (CAN) 18, possiblement (mais pas nécessairement) intégré dans le microcontrôleur 16.

Le compteur 1 comprend de plus un dispositif de détection 20.

Le dispositif de détection 20 comprend ici l'unité de traitement 15, et notamment le microcontrôleur 16 et le CAN 18. Ceci n'empêche pas que l'unité de traitement 16 peut avoir des fonctions autres que celle-ci, et par exemple des fonctions de métrologie (mesure de la consommation de l'eau) .

Le dispositif de détection 20 comporte de plus un émetteur 21 et un récepteur 22, montés sur la carte électronique 3.

L'émetteur 21 est agencé pour émettre des signaux lumineux, et le récepteur 22 est agencé pour recevoir les signaux lumineux après que ceux-ci se sont réfléchis contre une paroi interne du boîtier 2, qui est en l'occurrence la paroi interne 12 de la cloison supérieure 7 du capot 4. Par « interne », on entend du côté de l'intérieur du compteur 1. Les signaux lumineux sont par exemple des signaux infrarouges.

Les signaux lumineux émis par l'émetteur 21 traversent donc le potting 13, la vitre 11, sont réfléchis par la paroi interne 12, puis capturés par le récepteur 22.

L'émetteur 21 est ici une diode électroluminescente (LED) et le récepteur 22 est ici un phototransistor.

La LED 21 et le phototransistor 22 sont positionnés à côté l'un de l'autre, sur la face supérieure du circuit imprimé de la carte électronique 3.

Lorsque le boîtier 2 est fermé, la LED 21 et le phototransistor 22 sont positionnés en regard de la paroi interne 12, et la vitre 11 est positionnée entre la LED 21 et le phototransistor 22, d'une part, et la paroi interne 12, d'autre part.

Ici, la LED 21 et le phototransistor 22 sont positionnés à 5 mm l'un de l'autre, et à une distance de 1 cm de la paroi interne 12 du capot 4.

On note que la paroi interne 12 comprend un réflecteur 24 contre lequel sont réfléchis les signaux lumineux.

Le réflecteur 24 est par exemple un matériau réflecteur déposé chimiquement sur la paroi interne, par exemple par sérigraphie, par spray d'encre ou spray de peinture. Le réflecteur 24 pourrait aussi par exemple être une étiquette autocollante et réfléchissante, collée sur la paroi interne 12. L'étiquette autocollante est sélectionnée pour son pouvoir réfléchissant et sa tenue dans le temps.

On explique tout d'abord le principe de l'invention. Celle-ci vise donc à détecter si le compteur 1 est immergé. La détection de l'immersion consiste à détecter si de l'eau a pénétré dans le boîtier 2, et notamment s'il y a de l'eau entre la vitre 11 et la paroi interne 12.

La détection se base sur la mesure des réflexions optiques d'un signal lumineux émis par la LED 21 puis réfléchi sur la paroi interne 12 du boîtier 2, et enfin capturé par le phototransistor 22.

La présence de l'eau fait chuter la puissance du signal lumineux réfléchi et donc le niveau de signal dans le phototransistor 22. Le signal électrique produit par le phototransistor 22 peut donc être utilisé pour détecter l'immersion. Une fois l'immersion terminée, l'eau s'évacue ou sèche et n'est plus présente dans le chemin optique du dispositif de détection 20 (comme sur la figure 1).

Ici, le phototransistor 22 est relié à une résistance. Le phototransistor 22 produit un courant électrique qui dépend de l'intensité du signal lumineux qu'il capture. Le convertisseur analogique numérique 18 acquiert la tension électrique aux bornes de la résistance et produite par ce courant, et la numérise. L'unité de traitement 15 utilise ce signal numérisé pour réaliser la détection.

Cependant, le niveau de luminosité dans le châssis 5 dépend aussi de l'éclairage à l'extérieur du boîtier 2, et on améliore nettement la fiabilité de la détection de l'immersion en effectuant à chaque fois deux mesures du signal électrique produit par le phototransistor 22 : une mesure alors que la LED 21 émet un signal lumineux (la LED 21 est allumée), et une mesure lorsque la LED 21 n'émet pas de signal lumineux (la LED 21 est éteinte). On compare alors une valeur de détection courante représentative de la différence entre les niveaux de ces deux signaux avec une valeur de détection de référence qui a été obtenue au cours d'une étape de calibration réalisée en usine (ou en laboratoire) à la fin de la fabrication du compteur 1, avant que celui-ci ne soit livré et installé chez le client. La valeur de détection de référence, enregistrée en condition nominale avec le capot 4 en place et sans immersion, est normalisée à 100%.

L'utilisation de la différence entre les deux signaux permet de s'affranchir de la difficulté liée aux différences possibles de la luminosité à l'extérieur du boîtier 2.

A intervalles réguliers, l'unité de traitement 15 :
∘ pilote la LED 21 pour que celle-ci émette un signal lumineux de détection Sl ;
∘ acquiert un premier signal électrique Se1 produit par le phototransistor 22 lorsque celui-ci reçoit le signal lumineux de détection Sl ;
∘ acquiert un deuxième signal électrique Se2 produit par le phototransistor 22 alors que la LED 21 est éteinte ;
∘ compare avec au moins un seuil une valeur de détection courante représentative d'une différence entre le premier niveau du premier signal électrique Se1 et le deuxième niveau du deuxième signal électrique Se2 ;
∘ détecte à partir de ladite comparaison une immersion du compteur 1.

En présence d'eau dans le compteur 1, notamment entre la vitre 11 et la paroi interne 12 de la cloison 7, le premier niveau du premier signal électrique Se1 diminue car l'eau, présente dans le chemin optique, absorbe les signaux lumineux et la mesure est atténuée. La valeur de détection courante diminue.

On détecte donc l'immersion du compteur 1 en détectant une baisse de la valeur de détection courante.

On note que le canal 14 permet d'améliorer la détection de l'immersion. Le canal 14 permet d'évacuer l'eau mais aussi de la faire rentrer.

La section transversale du canal 14 correspond à la distance d. Cette section est importante et améliore la circulation d'eau dans le canal 14.

L'ouverture 9 débouche dans le canal 14, ce qui améliore l'entrée et la sortie d'eau dans le canal 14.

Ainsi, quelle que soit l'orientation du compteur 1 et quel que soit le niveau d'immersion, de l'eau circule dans le canal 14 - et la circulation de l'eau est facilitée par la configuration géométrique et les dimensions du canal 14.

En cas d'immersion, plus le volume d'eau traversée par le signal lumineux de détection est important, plus la détection de l'immersion est fiable. Par conséquent, augmenter le volume d'eau dans le compteur 1 au moment d'une immersion permet d'augmenter la fiabilité de la détection de l'immersion. L'eau est ensuite évacuée via les extrémités 19 du canal 14.

Avantageusement, la surface de réflexion (ici le réflecteur 24) de la paroi interne du boîtier, contre laquelle les signaux lumineux de détection se réfléchissent, est située dans le canal 14. On assure ainsi que la détection optique est réalisée sur la base d'un signal lumineux qui a nécessairement traversé de l'eau en cas d'immersion du compteur - et on améliore ainsi encore la fiabilité de la détection.

Ici, le procédé de détection permet aussi de détecter si le boîtier 2 a été ouvert. On sait en effet que certaines personnes malintentionnées connaissent des techniques qui leur permettent, après avoir ouvert le boîtier de leur compteur, de manipuler celui-ci pour réduire la mesure de leur consommation. Il est donc très intéressant d'être en mesure de détecter que le boîtier 2 a été ouvert de manière frauduleuse (*tampering*). La détection de l'ouverture du boîtier utilise aussi le dispositif de détection 20.

La baisse de la valeur de détection courante est nettement plus élevée lorsque le boîtier 2 est ouvert que lorsque le compteur 1 est immergé.

Par conséquent, l'unité de traitement 15 :
- compare la valeur de détection courante avec un premier seuil S1 et un deuxième seuil S2 inférieur au premier seuil ;
- si la valeur de détection courante est comprise entre le premier seuil S1 et le deuxième seuil S2, l'unité de traitement 15 détecte l'immersion du compteur 1 ;
- si la valeur de détection courante est inférieure au deuxième seuil, l'unité de traitement 15 détecte une ouverture du boîtier 2.

Le premier seuil S1 est par exemple compris entre 70% et 90% de la valeur de détection de référence obtenue pour le compteur 1 au cours de la phase de calibration du compteur 1, et est ici égal à 80% de la valeur de détection de référence.

Le deuxième seuil S2 est par exemple compris entre 30% et 50% de la valeur de détection de référence obtenue pour le compteur au cours de la phase de calibration, et est ici égal à 40% de la valeur de détection de référence.

On a donc : $S 1 = 80 \times Vref / 100$ et $S 2 = 40 \times Vref / 100 ,$ où S1 est le premier seuil, S2 est le deuxième seuil, et Vref est la valeur de détection de référence.

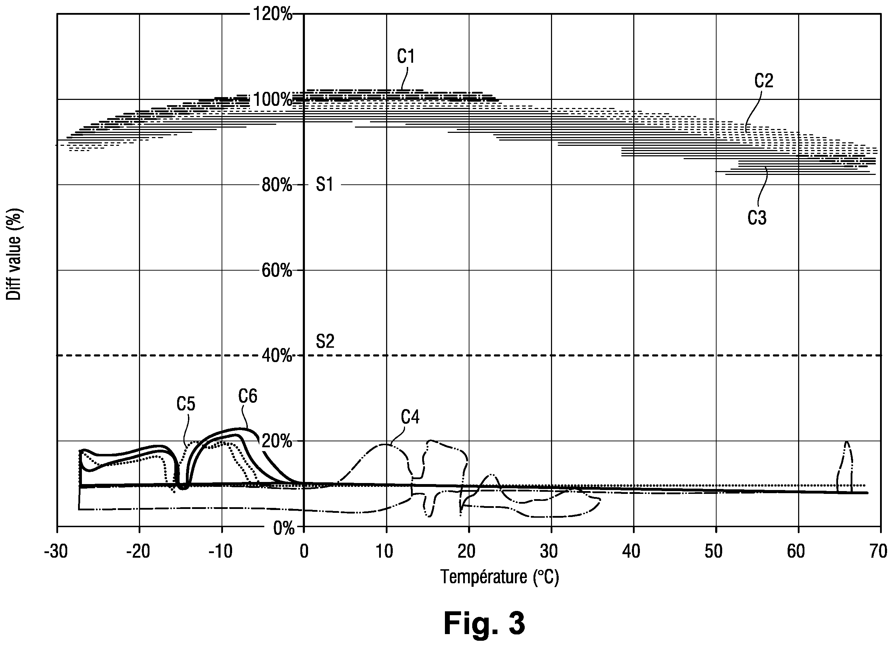

En référence à la figure 3, on montre la pertinence des seuils utilisés en décrivant les tests réalisés sur une pluralité de compteurs semblables au compteur 1.

On a tout d'abord réalisé des tests sur ces compteurs avec le boîtier 2 fermé et le boîtier 2 ouvert.

Lorsque le boîtier 2 est correctement fermé, donc lorsque le capot 4 est monté sur le châssis 5 (courbes C1, C2, C3), le rapport entre la valeur de détection courante et la valeur de détection de référence demeure bien supérieur à 80% (S1), et ce, sur toute la gamme de température [-30°C, +70°C], donc même dans des conditions thermiques extrêmes.

Lorsque le boîtier 2 est ouvert, donc lorsque le capot 4 n'est pas monté sur le châssis 5 (courbes C4, C5, C6), le rapport entre la valeur de détection courante et la valeur de détection de référence chute significativement et atteint des valeurs inférieures à 20%, et ce sur toute la gamme de température [-30°C, +70°C], donc même dans les conditions thermiques extrêmes. Le seuil de 40% (S2) est donc nettement distinct des valeurs obtenues sans immersion, aussi bien avec que sans capot.

Cette distinction claire entre les états permet d'établir des seuils fiables pour différencier une immersion d'une ouverture anormale du boîtier 2.

On a ensuite, dans un deuxième temps, réalisé des tests d'immersion sur les compteurs afin de caractériser leur comportement optique en condition immergée. Les résultats obtenus sont présentés dans le tableau en Annexe.

La ligne L1 contient les résultats obtenus avant immersion, la ligne L2 contient les résultats obtenus 15mn après l'immersion, les lignes L3 à L7 contiennent respectivement les résultats obtenus aux jours 1, 2, 3, 4, 5 après l'immersion, et la ligne L8 contient les résultats obtenus après l'immersion, une fois que les compteurs ont été sortis de l'eau et que l'eau s'est évacuée des compteurs.

Les mesures montrent qu'en situation d'immersion, la valeur de détection courante Vc se stabilise typiquement entre 60% et 70% de la valeur de référence. Ce comportement cohérent permet de distinguer l'immersion d'un fonctionnement normale ou d'une ouverture du boîtier 2, et donc de définir une plage de seuils d'immersion fiable.

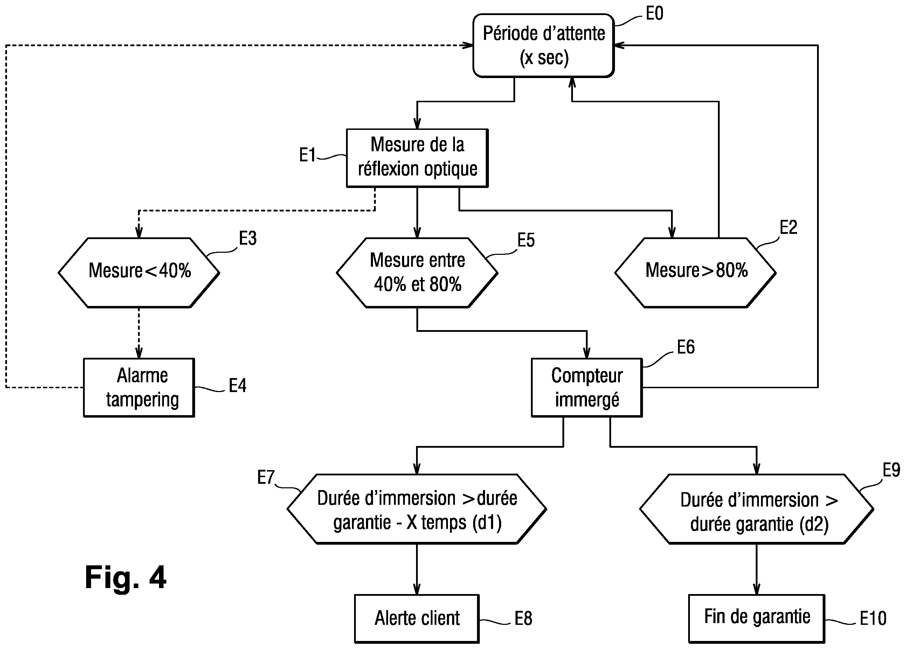

En référence à la figure 4, le procédé de détection débute donc pas une période d'attente qui est par exemple de 10 secondes : étape E0. La période d'attente, qui définit la fréquence des opérations de détection, pourrait être de durée différente, ou bien de durée variable. La valeur de détection de référence a été acquise au cours de la phase de calibration et est enregistrée dans la mémoire 17 de l'unité de traitement 15.

L'unité de traitement 15 pilote la LED 21 pour qu'elle émette un signal lumineux de détection, et acquiert le premier signal électrique produit par le phototransistor 22. Puis, l'unité de traitement 15 pilote la LED 21 pour l'éteindre et acquiert le deuxième signal électrique produit par le phototransistor 22 alors que la LED 21 est éteinte. L'ordre d'acquisition du premier signal électrique Se1 (et de l'émission du signal lumineux de détection), d'une part, et du deuxième signal électrique Se2, d'autre part, pourrait être différent. L'unité de traitement 15 calcule la valeur de détection courante, puis la compare avec le premier seuil et le deuxième seuil (étape E1). $Si Vc / Vref > 80 %$
l'unité de traitement 15 détecte que le boîtier 2 est fermé et ne contient pas d'eau. La situation est normale et le procédé repasse à l'étape E0. $Si Vc / Vref < 40 %$
l'unité de traitement 15 détecte que le boîtier 2 a été ouvert. L'unité de traitement 15 émet une alarme d'ouverture anormale (étape E4). Le procédé repasse à l'étape E0.

Si la valeur de détection courante est comprise entre le premier seuil et le deuxième seuil, donc si : $40 % < Vc / Vref < 80 %$ l'unité de traitement 15 détecte que le compteur 1 est immergé (étape E6).

Lorsque la durée d'immersion devient supérieure à une première durée prédéfinie (étape E7), l'unité de traitement 15 produit une alarme (étape E8). L'alarme est par exemple émise à destination du client ou du distributeur d'eau ou du gestionnaire du réseau.

Cette alarme signifie qu'il convient d'intervenir pour stopper l'immersion du compteur 1, sans quoi celui-ci risque fortement de fonctionner de manière dégradée et/ou de cesser de fonctionner.

La première durée prédéfinie d1 est égale à :
d2 - Xtemps.
d2 est une deuxième durée prédéfinie et Xtemps est une valeur de temps par exemple constante. Cela signifie que la durée d1 est inférieure à la durée d2.

La deuxième durée prédéfinie d2 est la durée de garantie en immersion, qui est par exemple égale à 2 mois.

A l'étape E6, si la durée d'immersion devient supérieure à la deuxième durée prédéfinie d2 (étape E9), cela signifie que le compteur 1 est resté immergé trop longtemps pour que quiconque puisse prétendre à un remplacement sous garantie (étape E10). Une fin de garantie est automatiquement enregistrée. Cette information est très importante pour le fabricant du compteur qui peut ainsi gérer la problématique de la garantie.

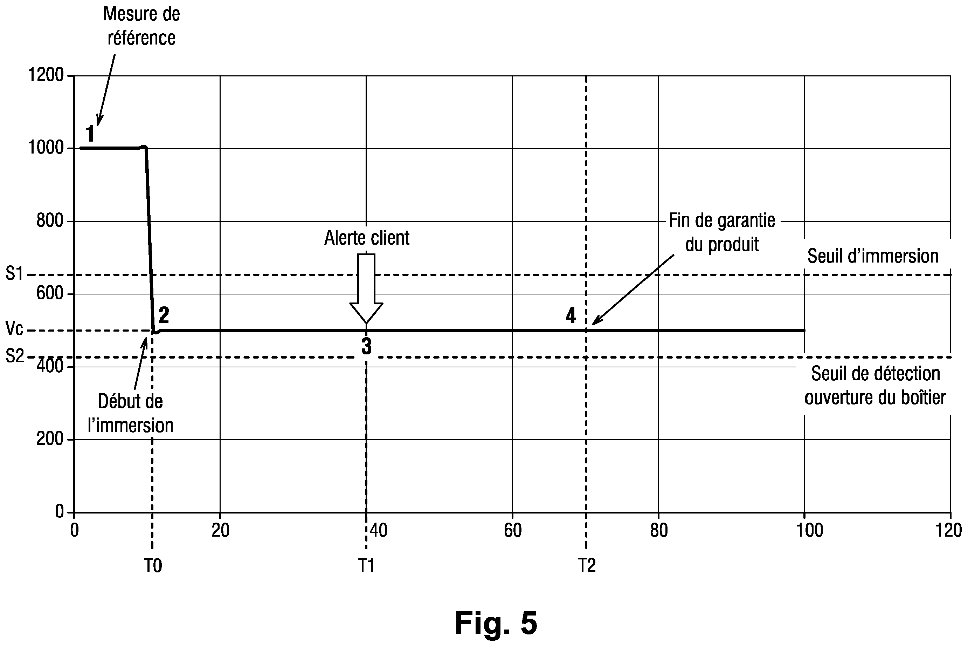

On retrouve ces étapes sur la figure 5, dans le cas d'une immersion.

La valeur de détection de référence a été déterminée au cours d'une phase de calibration. Le compteur 1 est immergé au temps T0. La valeur de détection courante Vc est alors comprise entre le premier seuil S1 et le deuxième seuil S2. L'alerte client est émise au temps T1. La fin de garantie survient au temps T2.

La durée d'immersion considérée, qui est comparée avec les durées prédéfinies, peut-être une durée en continue, c'est-à-dire une durée d'immersion sans interruption.

La durée d'immersion considérée peut aussi être une durée cumulée, par exemple sur toute la vie du compteur 1.

Bien entendu, l'invention n'est pas limitée au mode de réalisation décrit mais englobe toute variante entrant dans le champ de l'invention tel que défini par les revendications.

La détection de l'ouverture du boîtier est optionnelle, seule la détection de l'immersion pourrait être mise en œuvre.

L'équipement dans lequel est mise en œuvre l'invention n'est pas nécessairement un compteur d'eau. Il peut s'agir de tout type de compteur et même, plus généralement, de tout type d'équipement.

L'émetteur n'est pas nécessairement une LED, mais pourrait être tout type de photoémetteur, et par exemple une diode laser.

Le récepteur n'est pas nécessairement un phototransistor, mais pourrait être tout type de photorécepteur, et par exemple une photodiode.

L'architecture électrique présentée pourrait être différente de celle décrite ici. Par exemple, l'émetteur et le récepteur pourraient être intégrés dans un même composant, directement dans une partie de boîtier, etc. Tous les composants électriques ne sont pas nécessairement montés sur une même carte.

Le boîtier peut être différent de celui présenté ici. Le boîtier ne comporte d'ailleurs pas nécessairement de partie de boîtier amovible (capot).

La détection est ici réalisée en fonction d'une valeur représentative d'une différence entre le premier niveau du premier signal électrique et le deuxième niveau du deuxième signal électrique. Cette valeur n'est donc pas nécessairement égale à la différence entre le premier niveau du premier signal électrique et le deuxième niveau du deuxième signal électrique. Il pourrait s'agir par exemple d'une différence entre le deuxième niveau et le premier niveau.

### Annexe :

| | **Jours** | **Compteur 1** | **Compteur 2** | **Compteur 3** | **Compteur 4** |
|---|---|---|---|---|---|
| L1 | Avant immersion | 100% | 100% | 100% | 100% |
| L2 | 15min | 73% | 72% | 100% | 100% |
| L3 | 1 | 73% | 71% | 71% | 67% |
| L4 | 2 | 72% | 70% | 70% | 66% |
| L5 | 3 | 72% | 70% | 70% | 66% |
| L6 | 4 | 71% | 71% | 69% | 66% |
| L7 | 5 | 71% | 70% | 69% | 66% |
| L8 | Après immersion | 100% | 100% | 98% | 100% |

## Revendications

1. Equipement (1) comprenant un boîtier (2) dans lequel sont intégrés :
- un émetteur (21) agencé pour émettre des signaux lumineux ;
- un récepteur (22) agencé pour recevoir les signaux lumineux après que ceux-ci se soient réfléchis contre une paroi interne (12) du boîtier ;
- une unité de traitement (15) agencée pour :
∘ piloter l'émetteur (21) pour que celui-ci émette un signal lumineux de détection (Sl) ;
∘ acquérir un premier signal électrique (Se1) produit par le récepteur (22) lorsque celui-ci reçoit le signal lumineux de détection ;
∘ acquérir un deuxième signal électrique (Se2) produit par le récepteur (22) alors que l'émetteur est éteint ;
∘ comparer avec au moins un seuil (S1, S2) une valeur de détection courante (Vc) représentative d'une différence entre un premier niveau du premier signal électrique (Se1) et un deuxième niveau du deuxième signal électrique (Se2) ;
∘ détecter à partir de ladite comparaison une immersion de l'équipement (1) ;
l'unité de traitement (15) étant agencée pour :
- comparer la valeur de détection courante (Vc) avec un premier seuil (S1) et un deuxième seuil (S2) inférieur au premier seuil ;
- si ladite valeur de détection courante est comprise entre le premier seuil et le deuxième seuil, détecter l'immersion de l'équipement (1) ;
- si ladite valeur de détection courante est inférieure au deuxième seuil, détecter une ouverture du boîtier (2),
un canal (14) étant défini dans le boîtier, le canal étant agencé pour permettre à l'eau de s'évacuer suite à une immersion de l'équipement.

2. Equipement selon la revendication 1, dans lequel le premier seuil (S1) est compris entre 70% et 90% d'une valeur de détection de référence obtenue au cours d'une phase de calibration de l'équipement, et le deuxième seuil (S2) est compris entre 30% et 50% de ladite valeur de détection de référence.

3. Equipement selon l'une des revendications précédentes, dans lequel l'unité de traitement (15) est agencée pour produire une alarme lorsqu'une durée d'immersion devient supérieure à une durée prédéfinie.

4. Equipement selon la revendication 3, ladite durée d'immersion étant une durée en continue.

5. Equipement selon la revendication 3, ladite durée d'immersion étant une durée cumulée.

6. Equipement selon l'une des revendications précédentes, dans lequel le boîtier (2) comprend une première partie de boîtier (4) et une deuxième partie de boîtier (5), la première partie de boîtier étant amovible, la paroi interne (12) étant une paroi de la première partie de boîtier, la deuxième partie de boîtier intégrant l'émetteur (21) et le récepteur (22), l'équipement étant agencé de sorte que, lorsque le boîtier est fermé, l'émetteur et le récepteur sont positionnés en regard de la paroi interne.

7. Equipement selon la revendication 6, dans lequel la deuxième partie de boîtier comprend une cloison transparente (11) ou translucide aux signaux lumineux, l'équipement étant agencé de sorte que, lorsque le boîtier est fermé, ladite cloison est positionnée entre l'émetteur (21) et le récepteur (22), d'une part, et la paroi interne (12), d'autre part.

8. Equipement selon l'une des revendications précédentes, dans lequel le boîtier (2) est rempli d'une résine ou d'un gel (13) pour protéger des composants de l'équipement contre l'humidité.

9. Equipement selon l'une des revendications précédentes, dans lequel la paroi interne (12) comprend un réflecteur (24) contre lequel sont réfléchis les signaux lumineux.

10. Equipement selon l'une des revendications précédentes, l'équipement étant un compteur d'eau.

11. Procédé de détection, mis en œuvre dans l'unité de traitement de l'équipement selon l'une des revendications précédentes, et comprenant les étapes de :
∘ piloter l'émetteur (21) pour que celui-ci émette un signal lumineux de détection (Sl) ;
∘ acquérir un premier signal électrique (Se1) produit par le récepteur (22) lorsque celui-ci reçoit le signal lumineux de détection ;
∘ acquérir un deuxième signal électrique (Se2) produit par le récepteur (22) alors que l'émetteur est éteint ;
∘ comparer une valeur de détection courante (Vc), représentative d'une différence entre un premier niveau du premier signal électrique (Se1) et un deuxième niveau du deuxième signal électrique (Se2), avec un premier seuil (S1) et un deuxième seuil (S2) inférieur au premier seuil ;
∘ si ladite valeur de détection courante est comprise entre le premier seuil et le deuxième seuil, détecter l'immersion de l'équipement (1) ;
∘ si ladite valeur de détection courante est inférieure au deuxième seuil, détecter une ouverture du boîtier (2).

12. Programme d'ordinateur comprenant des instructions qui conduisent l'unité de traitement (15) de l'équipement (1) selon l'une des revendications 1 à 10 à exécuter les étapes du procédé de détection selon la revendication 11.

13. Support d'enregistrement lisible par ordinateur, sur lequel est enregistré le programme d'ordinateur selon la revendication 12.
